(19) Europäisches Patentamt
European Patent Office
Office européen des brevets

(11) **EP 3 422 298 A1**

(12) **EUROPEAN PATENT APPLICATION**

(43) Date of publication:
**02.01.2019 Bulletin 2019/01**

(51) Int Cl.:
***G06T 19/20*** (2011.01)

(21) Application number: **17305809.0**

(22) Date of filing: **28.06.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Thomson Licensing**
**92130 Issy-les-Moulineaux (FR)**

(72) Inventors:
• POULI, Foteini
  35576 Cesson Sévigné (FR)
• PHUNG, Thanh Hang
  35576 Cesson Sévigné (FR)
• KERVEC, Jonathan
  35576 Cesson Sévigné (FR)

(74) Representative: **Vidon Brevets & Stratégie**
**16B, rue de Jouanet**
**BP 90333**
**35703 Rennes Cedex 7 (FR)**

(54) **DEVICE AND METHOD FOR PROPAGATING EDITS IN A VIRTUAL REALITY SCENE REPRESENTED IN A CURVED SHAPE FORM**

(57) For propagating edits in a virtual reality scene (21) represented in a curved shape form, at least one local edit enforced on at least one planar key view of the scene is obtained (11), and the local edit(s) is/are propagated (12) from the key view(s) to at least one part of the scene beyond the key view(s) by applying at least one propagated edit to the part(s). The propagated edit(s) is/are given by attenuating the local edit(s) over the curved shape form by at least one respective attenuation coefficient increasing with a distance from at least one reference point of the curved shape form corresponding to a local area of the key view(s), to any edit point of the part(s).

Applications to color grading, visual enhancements and special effects.

Fig 1

**Description**

**1. Technical field**

The invention relates to the domain of Virtual Reality (VR) and regards more particularly editing applied to curved shape representations.

**2. Background art**

In VR, content often takes the form of 360° scenes, in which the viewer can look (or even move) freely around. Such scenes can usually be thought of as cylinders (360° horizontally) or spheres (360° horizontally and vertically), with the viewer placed at a central point. This can lead to a more immersive experience compared with traditional contents.

VR content can include interactive scenarios, such as games, where the user can interact with objects or persons inside the VR environment, or passive scenarios that are closer to a traditional movie experience but covering 360°.

Now, it proves desirable in several situations to edit a VR scene. Notably, color correction or color grading is a key step of movie production, where skilled artists modify the colors, contrast and intensity of images to achieve a particular look and feel, according to wishes of the director of a movie. Editing a VR scene can also be useful e.g. in video games or smartphone or tablet applications, where special effects or color changes can be introduced by a user. Even where a related apparatus is providing only a limited field of view (smartphone, tablet), the 360° scene may be explored by moving the apparatus around. Automatic editing of received VR scenes is another interesting application, in which appropriate adjustments can be applied depending on predetermined criteria.

However, existing tools and workflows of editing, such as color grading, are not adapted to VR content. Namely, to encode, store and process a VR scene, the 360 degrees of the scene are usually projected onto a plane, using any of different projections, which introduces very visible distortions to the image if viewed directly. Typically, a sphere is unwrapped towards a rectangular format, related compartments towards the poles of the sphere being stretched while compartments near the sphere equator being more compressed.

As the projected image does not correspond to what a human observer would see in the real scene, it is not appropriate for tasks such as color grading, where artistic decisions are taken based on the depicted scene. At the same time, even if the scene were to be viewed on a VR headset, only one part of the scene would be observed at any time. That projected or unwrapped representation is therefore not suited to professional use, nor to prosumer or consumer editing applications. As regards automatic editing systems, they are faced with an inherent processing complexity that can only be partly overcome subject to additional computation costs.

To effectively edit an image, a solution would consist in extracting and presenting to a user small parts of the scene that can be mainly undistorted, better matching the format of traditional images and video frames. Such small parts are known as rectilinear or gnomonic views.

Anyway, to cover the whole VR scene, many such images would be necessary.

Directly propagating data across a sphere is known and could be considered for color grading. For example, the Technical Report by T. Bülow, "Spherical Diffusion", University of Pennsylvania, TR No. MS-CIS-01-38, 2001, proposes a definition of a spherical Gaussian function as the Green's function of the spherical diffusion process, which allows to introduce a linear scale space on the sphere and can provide a related filter.

However, exploiting such techniques on a VR scene proves delicate and complex, or even inappropriate, as soon as desired edits are not reduced to basic global operations.

Consequently, being able to edit flexibly a VR scene represented in a curved shape form without being penalized by distortions appears highly desirable, for manual as well as automatic edit operations.

**3. Summary**

A purpose of the present disclosure is to enable convenient editing of a VR scene represented in a curved shape form, including in particular cylinders and spheres, whether involving manual user operations or not.

In the present disclosure, the term "editing" broadly encompasses changes brought to the VR scene, and covers notably color grading, visual enhancements and special effects. In the context of post-production, editing enables e.g. to attribute different looks and feels to different parts of the scene, taking advantage of the spherical, immersive nature of the content.

Applications of the disclosure include in particular post-production and color grading, video on demand where edits or adaptations can be applied on the fly depending both on the device and the content, and VR transmission scenarios (such as through broadcasting, streaming or multicasting) where grading or other edits are applied completely automatically on a display.

In advantageous implementations, the disclosure makes possible the exploitation of existing tools dedicated to traditional video images and/or of known propagation techniques over curved shape forms.

In this respect, an object of the present disclosure is notably a method for propagating edits in a virtual reality scene represented in a curved shape form. According to the disclosure, the method comprises:

- obtaining at least one local edit enforced on at least one planar key view of the virtual reality scene;
- propagating the local edit(s) from the planar key view(s) to at least one part of the virtual reality scene beyond the planar key view(s) by applying at least one propagated edit to the at least one part, the propagated edit(s) being given by attenuating the local edit(s) over the curved shape form by at least one respective attenuation coefficient increasing with a distance from at least one reference point of the curved shape form corresponding to a local area of the planar key view(s), to any edit point of the part(s).

A "planar key view" refers to a planar view of a portion of the VR scene, i.e. a planar image extracted from the VR scene by a planar projection of a portion of the VR scene represented in its curved shape form. It is advantageously created by projecting points of the surface of that curved shape form representation from a center of projection towards a plane tangential to the curved shape form representation.

When the VR scene has a spherical representation, the planar image is advantageously created by projecting points of the surface of the related sphere from the sphere center towards a plane tangential to that sphere. A gnomonic projection can notably be used in this respect.

Though a planar key view does not belong to the VR scene representation, it is sometimes referred to below as being "part" of the VR scene for sake of conciseness.

The planar key views are advantageously depicting important or representative parts of the VR scene.

Being so able to edit a VR scene represented in a curved shape form without being penalized by distortions nor by processing the whole VR scene directly can prove highly convenient and efficient, whether the local edits are enforced in the associated key views manually or through automatic editing operations.

Namely, it is advantageously made possible to select portions of the scene that can be viewed or edited on a planar screen with much less distortion than with global planar projections, and to exploit those parts as proxies, somewhat similar to a traditional process of selecting key frames as proxies for a whole sequence. Also, obtaining those portions consisting in the planar key views advantageously permits the application of traditional editing and color grading approaches.

The "increasing" of any of the attenuation coefficients is to be understood as non-decreasing or monotonically increasing. Namely, it can possibly include one or more flat parts in the increase, in which the attenuation coefficient remains constant. In particular execution modes, the attenuation coefficient is strictly increasing with the concerned distance.

In particular implementations, the virtual reality scene is spherical or cylindrical.

Advantageously, the virtual reality scene being projection coded as a planar surface, the planar key views are extracted from that planar surface. In a specific implementation thereof, the curved shape form is a sphere and the planar surface is selected among an equirectangular projection and a cube map.

The reference points of the curved shape form of the VR scene "correspond" to the local areas of the planar key views, in the sense that those reference points are projected from a center of projection (associated with the VR scene representation) to those local areas into a plane tangential to the curved shape form.

Preferably, at least one of the planar key views has a size based on a field of view of a human visual system and/or at least one field of view of one or more display device, such as notably a target virtual reality device and/or a color grading monitor.

That size corresponds then advantageously to a minimum of at least two of those fields of view.

The size can correspond notably to a horizontal and/or vertical dimension, and can be e.g. expressed as an angle of aperture.

Advantageously, the local area of at least one of the planar key view(s) is located at a center of that planar key view.

Also, the distance from the reference point(s) is advantageously a geodesic distance on the curved shape form.

In particular related execution modes, the curved shape form is spherical and the geodesic distance is an orthodromic distance.

According to advantageous implementations, the local edit(s) and propagated edit(s) are based on at least one of editing operations among color grading, visual enhancement and special effects.

In particular offline applications, the user can select manually parameters for each of the planar key views, proceed with desired edits and let the device propagate those edits to the whole scene. In particular online applications, which are especially attractive for consumer product exploitation, the editing of the planar key views is itself automatic, so that the whole editing process does not require user involvement.

In particular online applications, automatic enhancements are applied prior to display to the VR scene content through the planar key views, for instance by adapting a color gamut or a dynamic range of that content to capabilities of a currently used or of a target VR device.

In other particular online applications, styles or effects are available in a database, whether accessible locally or remotely. User-created VR content is then automatically stylized by analyzing one or more of the planar key views and by selecting the styles or effects appropriate to the outputs of that analysis.

Accordingly, in advantageous implementations, the local edits are automatically obtained.

In particular execution modes, the at least one local edit consists in at least two local edits enforced on respectively at least two planar key views and jointly propagated to the propagation part(s).

With manual editing, for example, the local edits can be associated successively with the concerned planar key views, and jointly propagating those local edits can be triggered once all such associations are available. With automatic editing, the enforcement of the local edits can be executed in parallel on the planar key views before their joint propagation.

More precisely, the method comprises advantageously propagating the local edits from the reference points associated respectively with the planar key views, by a weighted sum of the propagated edits corresponding respectively to the local edits.

In particular implementations, the weighted sum has as weights the attenuation coefficients respectively associated with those local edits, normalized by a sum of those attenuation coefficients.

In other implementations, the weighted sum has as weights, at a position of the curved shape form, on one hand the attenuation coefficient(s) associated with the local edit(s) corresponding to the planar key view(s) closest to that position, and on the other hand the attenuation coefficients normalized by a sum of the attenuation coefficients associated with the local edits corresponding to the others of the planar key views.

Those other implementations enable to prioritize nearest key views in the edit weighting.

Each of the attenuation coefficients is advantageously given by a function having as input the distance from the corresponding reference point(s) to the edit points of the part(s), and as output a value comprised between 0 and 1.

Advantageously, the reference point is unique for any of the planar key views (e.g. corresponding to the center of the planar key view).

In alternative modes, at least two reference points are used for at least one of the planar key views (e.g. corresponding to four points at the middles of the respective edges of a quadrilateral planar key view), each being associated with a different one of the attenuation coefficients. In variants, the attenuation corresponding to the concerned planar key view is given by a combination of those attenuation coefficients, e.g. by averaging their values at any of the edit points of the part(s).

In some execution modes, the attenuation coefficient increases as a power greater than one of the distance from the reference point(s).

In other execution modes, the attenuation coefficient increases linearly with the distance from the reference point(s).

Other execution modes include notably the attenuation coefficient being given by a piecewise linear function or a sigmoidal function.

The attenuation coefficients can further evolve differently depending on the concerned planar key views and/or types of edits, so that e.g. some attenuation coefficients increasing linearly are combined with attenuation coefficients increasing as a power greater than one.

In particular implementations, the attenuation coefficient has a full value at at least one opposite point of the virtual reality scene located opposite the reference point(s) of the curved shape form, preventing any influence of the local edit(s) at the opposite position(s).

In variant implementations, the attenuation coefficient has a bounded maximal value at at least one opposite point of the virtual reality scene located opposite the reference point(s) of the curved shape form, keeping a limited influence of the local edit(s) at the opposite point(s).

The attenuation coefficients can further evolve differently depending on the concerned planar key views and/or types of edits, so that e.g. some attenuation coefficients having no influence at the opposite points are combined with other attenuation coefficients having a limited influence.

In some embodiments, a union of the planar key view(s) and the propagation part(s) encompasses the whole virtual reality scene.

This proves convenient in particular for preprocessing or offline applications.

In alternative embodiments, the propagation part(s) is/are located within at least one current view available to a user in the virtual reality scene.

This can reduce significantly the computational efforts, and is thus more particularly adapted to operations on the fly or online applications. Such solutions take advantage of the fact that contrary to traditional images, in which the whole image needs to be analyzed to calculate appropriate parameters, the whole VR scene is not viewed at the same time.

Advantageously then, only a limited number of the planar key views, such as closest to the available current view, are selected for propagating the edits.

In particular modes, the local edits are propagated to a processing area comprising at least part of the planar key views.

Namely, one or more of the planar key views are then themselves submitted (fully or partly) to further editing, relying on the enforced editing in the planar key views. Such further editing in one of the planar key views is advantageously based on the editing enforced in others of the planar key views. In this way, a smoother result can be obtained in which the edits are enabled to interact between the planar key views.

In alternative modes, only parts of the VR scene complementary to the planar key views are submitted to edit propagation.

Another object of the disclosure is a device for propagating edits in a virtual reality scene represented in a curved shape form. According to the disclosure, the device comprises at least one processor configured for:

- obtaining at least one local edit enforced on at least one planar key view of the virtual reality scene;
- propagating the local edit(s) from the planar key view(s) to at least one part of the virtual reality scene beyond the planar key view(s) by applying at least one propagated edit to the part(s), the propagated edit(s) being given by attenuating the local edit(s) over the curved shape form by at least one respective attenuation coefficient increasing with a distance from at least one reference point of the curved shape form corresponding to a local area of the planar key view(s), to any edit point of the part(s).

The device is preferably configured for executing a method according to any of the above execution modes.

The device advantageously comprises at least one input adapted to obtain the local edits and at least one output adapted to output an edited version of the virtual reality scene or of a view available to a user, resulting from propagating the edits, or an edit map corresponding to such an edited version.

The disclosure also pertains to an apparatus chosen among a video receiver, a smartphone, a tablet and a virtual reality head-mounted display (HMD) system, comprising a device according to any of the modes of the disclosure.

In addition, the disclosure relates to a computer program comprising software code adapted to perform a method compliant with any of the above execution modes when the program is executed by a processor.

The present disclosure further pertains to a non-transitory program storage device, readable by a computer, tangibly embodying a program of instructions executable by the computer to perform a method for editing a virtual reality scene, compliant with the present disclosure.

Such a non-transitory program storage device can be, without limitation, an electronic, magnetic, optical, electromagnetic, infrared, or semiconductor device, or any suitable combination of the foregoing. It is to be appreciated that the following, while providing more specific examples, is merely an illustrative and not exhaustive listing as readily appreciated by one of ordinary skill in the art: a portable computer diskette, a hard disk, a ROM (read-only memory), an EPROM (Erasable Programmable ROM) or a Flash memory, a portable CD-ROM (Compact-Disc ROM).

## 4. List of figures

The present disclosure will be better understood, and other specific features and advantages will emerge upon reading the following description of particular and non-restrictive illustrative embodiments, the description making reference to the annexed drawings wherein:

- figure 1 is a block diagram representing schematically a particular mode of a device for propagating edits in a VR scene, compliant with the present disclosure;
- figure 2 illustrates the extraction of a single view from a spherical VR scene, as exploited in the device of figure 1;
- figure 3 shows an equirectangular projection of the spherical VR scene of figure 2;
- figure 4 illustrates a scene to camera plane projection as applied for extracting the single view of figure 2 on the ground of the equirectangular projection of figure 3;
- figures 5A and 5B show a cube map projection of the spherical VR scene of figure 2 in a respectively unfolded and folded form;
- figure 6 represents a sampled spherical VR scene according to a particular distribution of planar key views in a VR scene, as exploited in a device as shown on figure 1;
- figure 7 shows another equirectangular image of a 360° VR scene, as exploited in the device of figure 1;
- figures 8A, 8B and 8C represent spherical weight maps on the equirectangular image of figure 7, obtained respectively from edits applied to three different planar key views associated with the VR scene;
- figure 9 is a flow chart showing successive steps executed with the device of figure 1;

- figure 10 diagrammatically shows an AR apparatus comprising the device represented on figure 1.

On the figures, identical or similar elements are designated by the same references.

## 5. Description of embodiments

The present description illustrates the principles of the present disclosure. It will thus be appreciated that those skilled in the art will be able to devise various arrangements that, although not explicitly described or shown herein, embody the principles of the disclosure and are included within its spirit and scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, and the like represent various processes which may be substantially represented in computer readable media and so executed by a computer or processor, whether or not such computer or processor is explicitly shown.

The terms "adapted" and "configured" are used in the present disclosure as broadly encompassing initial configuration, later adaptation or complementation of the present device, or any combination thereof alike, whether effected through material or software means (including firmware).

The functions of the various elements shown in the figures may be provided through the use of dedicated hardware as well as hardware capable of executing software in association with appropriate software. When provided by a processor, the functions may be provided by a single dedicated processor, a single shared processor, or a plurality of individual processors, some of which may be shared. Moreover, explicit use of the term "processor" should not be construed to refer exclusively to hardware capable of executing software, and refers in a general way to a processing device, which can for example include a computer, a microprocessor, an integrated circuit, or a programmable logic device (PLD). Additionally, the instructions and/or data enabling to perform associated and/or resulting functionalities may be stored on any processor-readable medium such as, e.g., an integrated circuit, a hard disk, a CD (Compact Disc), an optical disc such as a DVD (Digital Versatile Disc), a RAM (Random-Access Memory) or a ROM memory. Instructions may be notably stored in hardware, software, firmware or in any combination thereof.

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces.

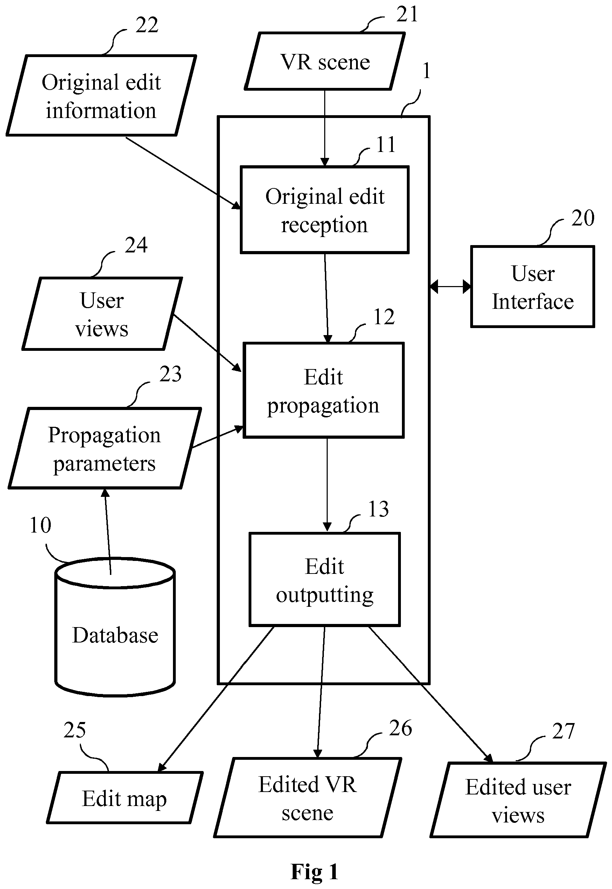

The present disclosure will be described in reference to a particular functional embodiment of a device 1 for propagating edits in a Virtual Reality (VR) scene, as illustrated on **Figure 1.**

The device 1 is adapted to edit fully or partly a VR scene 21 having a curved shape form, such as a 360° sphere or cylinder, so as to produce an edit map 25, an edited VR scene 26 and/or one or more edited user views 27. Such an edition can notably consist in color grading, visual enhancements and/or special effects.

Though the presently described device 1 is versatile and is provided with several functions that can be carried out alternatively or in any cumulative way, other implementations within the scope of the present disclosure include devices having only parts of the present functionalities. For example, in respective variants, the device is in charge of producing exclusively the edit map 25, of producing exclusively the edited scene 26, or of producing exclusively the edited user views 27. Any combinations of those capacities can be further included in a variant device.

The device 1 is advantageously an apparatus, or a physical part of an apparatus, designed, configured and/or adapted for performing the mentioned functions and produce the mentioned effects or results. In alternative implementations, the device 1 is embodied as a set of apparatus or physical parts of apparatus, whether grouped in a same machine or in different, possibly remote, machines.

In what follows, the modules are to be understood as functional entities rather than material, physically distinct, components. They can consequently be embodied either as grouped together in a same tangible and concrete component, or distributed into several such components. Also, each of those modules is possibly itself shared between at least two physical components. In addition, the modules are implemented in hardware, software, firmware, or any mixed form thereof as well. They are preferably embodied within at least one processor of the device 1.

The device 1 comprises a module 11 for receiving specific local edits together with related location information in the VR scene 21, constituting original edit information 22. More precisely, those specific edits are applied to one or more planar key views extracted from the VR scene 21. The local edits are advantageously defined for each associated key view as a vector of parameter values, e.g. contrast, saturation and/or lift (in a lift-gamma-gain contrast model) for color grading.

The original edit information 22 can include complete data defining the related planar key views. In alternative implementations, they include only partial data on those key views, sufficient for particular edit propagation. For example, those data are defining centers of the related planar key views while the original edits are modeled as applied at the key view centers.

The editing operations can be executed by artists on the planar key views, which can be viewed without projection distortions on a normal display. Once ready, edited versions of the planar key views are received by the reception module 11.

In a variant implementation, extracted key views are directly transmitted to an automatic edition system configured for planar view edition. In this respect, existing methods for automatic image enhancements can be directed applied to those extracted key views, relying on parameters depending on the image content. The edited key views are then directly retrieved from that edition system and transmitted to the reception module 11.

Quite interestingly, the planar key views subject to edition can be treated as equivalent to frames of a video, and edited in a similar way.

The device 1 further comprises a module 12 for propagating those local edits over at least part of the VR scene 21 beyond the associated planar key views, on the ground of propagation parameters 23 retrieved from one or more local or remote database(s) 10. The latter can take the form of storage resources available from any kind of appropriate storage means, which can be notably a RAM or an EEPROM (Electrically-Erasable Programmable Read-Only Memory) such as a Flash memory, possibly within an SSD (Solid-State Disk). In particular implementations, the propagation parameters 23 can be user selected among several options.

Alternatively, the propagation parameters 23 are received from a communication network or directly user entered.

In first modes, the whole VR scene 21 is affected by the edition, which enables to get a globally edited representation, either in the form of the edited VR scene 26 or of the corresponding edit map 25. In particular implementations, the edition is then carried out offline by the device 1, during a pre-processing stage. In this way, the edited VR scene is later available for any user's view during online operations.

This can be suited to a static scene, in which no movements of objects within the VR scene 21 are considered. This can also be relevant to a dynamic scene, the device 1 applying advantageously the edition to a set of selected key frames obtained from an animated sequence or shot, before propagating it to the whole VR scene 21.

In second modes, the edition propagation regards only part of the VR scene 21. This can be useful in particular in case the extent of the VR scene 21 viewable online is restricted. Namely, the module 12 is then configured for obtaining one or more current user views 24, so that the edited user views 27 or the corresponding edit map 25 can be produced.

The terms "user views" refer to current views available to one or more users at a given time. More precisely, each of the user views 24 advantageously corresponds to a portion of the VR scene 21 as viewed by an observer at a given point in time, such as notably with a VR headset or a viewer. It depends notably on the respective positions of the observer and viewing apparatus. Such a user view 24 is close to what would be traditionally visible on a display. In alternative or complementary implementations, one or more edited views corresponding to a screen of a visualization or processing apparatus are considered. For sake of convenience, the terms "user views" are considered below as encompassing also such edited planar views.

Considering two or more user views 24 can notably enable to anticipate user eyes movements and/or to have two or more users sharing a same 360° immersive scene, whether through a joint presence in a common surrounding environment or by being connected to a same control device.

Also, for VR video, different portions of the VR scene 21 may be viewable online by the user at distinct times. Then, the preprocessing edition propagation can be restricted for each instant VR scene to the concerned portions - thereby providing significant computational savings.

In this respect, the initially edited planar key views (as obtained by the reception module 11) or the ones exploited for edit propagation (by the edit propagation module 12) can be selected among a global set of possible key views, in function of the user views 24. In particular embodiments, such selected planar key views are those closest to the user views 24, e.g. in the horizontal and/or in the vertical directions. In other embodiments, they further include more remote key views, within a predetermined reach around the user views 24. In still other embodiments, the selected key views 24 are determined based on their potential influence on the edition of the user views 24, e.g. most significant color edits. Namely, not only the distance to the user views 24 but also the intensity of the edits are then taken into account.

In addition, the initial edit processing of the extracted planar key views can be based on an image content analysis of those key views.

The second modes taking account of the user views 24 are particularly suited to online exploitation of consumer products. They can allow a substantial reduction of computation costs for editing the user views 24, based on appropriate edited planar key views.

The edit propagation can be applied to the remaining pixels of the VR scene outside the edited planar key views. In variant implementations, that editing is also applied to the edited planar key views themselves, which are thereby modified by edits executed on others of the extracted key views.

The device 1 also comprises a module 13 for outputting the propagated edits in the form of the edit map 15, the edited VR scene 26 and/or the edited user views 27.

When the edit map 15 is outputted, it can correspond in particular to the complete VR scene 21 or to specific parts thereof, such as notably the user views 24.

The device 1 is interacting with a user interface 20, via which information can be entered and retrieved by a user. The user interface 20 includes any means appropriate for entering or retrieving data, information or instructions, notably visual, tactile and/or audio capacities that can encompass any or several of the following means as well known by a person skilled in the art: a screen, a keyboard, a trackball, a touchpad, a touchscreen, a loudspeaker, a voice recognition system.

For example, the user interface 20 enables a user to enter a number of extracted planar key views dedicated to edition, to select or enter some of the propagation parameters and/or to select the desired output from the device 1.

The number of the extracted key views exploited for edition is e.g. comprised between 1 and 20, and preferably between 1 and 10. Setting that number to 1 can amount to a global edition corresponding to a traditional method. Also, increasing the number of key views can enhance the editing capacities, subject to additional computation costs.

More details are provided below about the extraction of the planar key views associated with the edits, as well as of the user views 24. Advantageously, several points are first selected and serve as respective centers of key views to be extracted. Depending on the embodiments, those points are selected either by regularly sampling the VR scene 21, or by analyzing the complete VR scene 21 and selecting areas that conform to particular characteristics.

The VR scene analysis and the criteria for key view extraction can be chosen in function of targeted applications. In particular, for a dynamic VR scene, temporal information can play an active role in extracting the key views to be initially edited, advantageously either in the form of motion or in the form of audio.

Once center points are selected, planar key views can be extracted from the related representation, e.g. from a 360° VR sphere. To determine degrees of visual angle horizontally and vertically covered by those key views, several aspects can be considered, including:

- capabilities and a visual field of the human visual system;
- a target VR viewing device and a field of view (FoV) covered by its display;
- a target color grading monitor and its FoV.

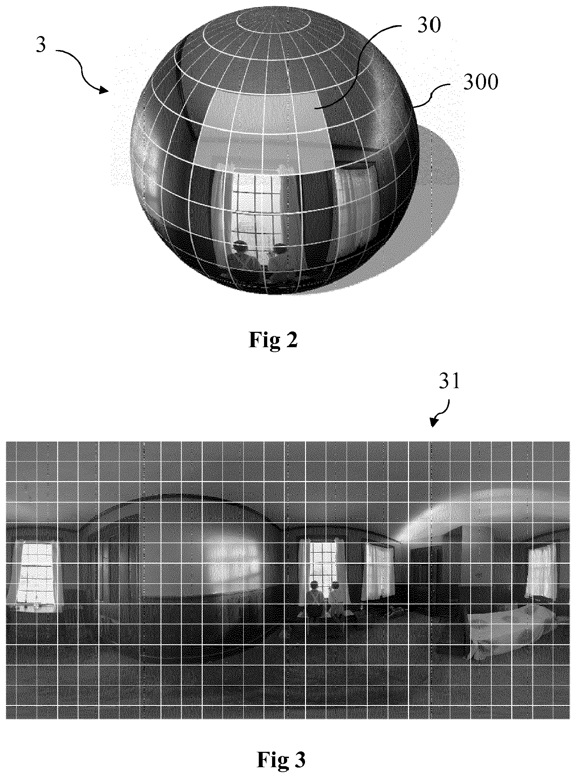

The process for extracting the initially edited key view is now detailed in an example, in relation with **Figures 2 to 4.** As represented on **Figure 2,** a view 30 corresponding to a planar image needs to be extracted from a spherical VR scene 3 represented on a sphere 300 (for sake of illustration only, the view 30 is magnified with respect to generally exploited key views; it is presently e.g. turned towards a ceiling).

To extract the view 30 from the sphere 300, the following pieces of information can be exploited:

- camera position - considered at the center of the sphere 300;
- camera viewpoint - corresponding to a center of the view 30 and given as spherical coordinates;
- camera field of view - in horizontal and vertical degrees;
- camera projection model - describing how a point in the sphere 300 is projected to the camera plane.

In addition, the spherical VR scene 3 is encoded into a planar image format using a map projection. In particular implementations, an equirectangular projection 31 is used, as visible on **Figure 3,** the sphere 300 being unwrapped towards a plane. In this projection, the whole spherical scene 3 is visualized within a single planar image that can be viewed on a normal display. It should be noted that different parts of the scene 3 obtain different amounts of deformation: the center part corresponding to the equator of the sphere 300 has less deformation, while the poles obtain more distortion. However, the distortion is horizontal only, since parallel vertical lines remain parallel. Additionally, the horizontal coordinate provides the latitude on the sphere 300.

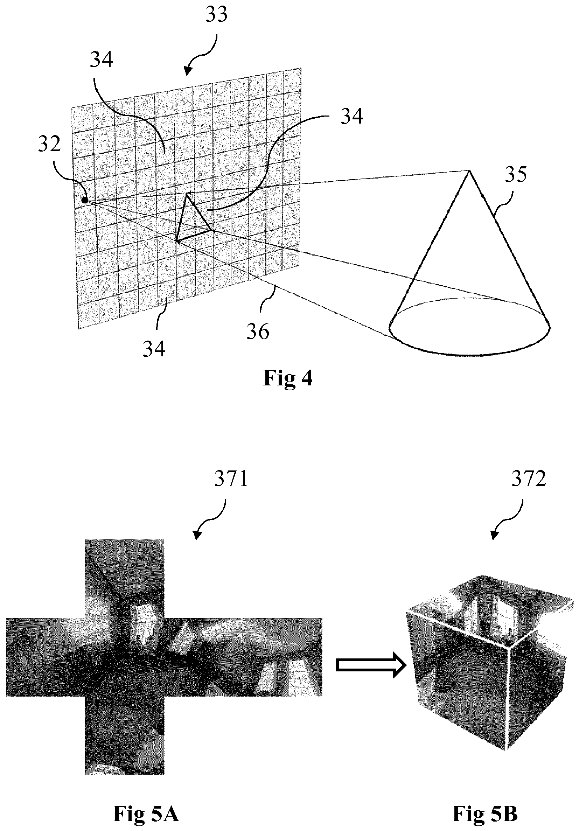

Extracting the view 30 from the sphere 300 amounts to a standard ray tracing problem, about which more details can be found for example in the article by R. Szeliski, "Computer vision: algorithms and applications", Springer Science & Business Media, 2010. In practice, as visible on **Figure 4:**

- a canvas (plane) 33 formed of a grid of pixels 34 is defined relative to a hypothetical camera focal point (center of projection) 32, representing an image plane to be extracted, with a desired resolution;

- for each pixel 34 in this canvas 33, a line 36 is extended from the center of projection 32 through that pixel 34 towards a surface of a 3D object 35, present in the scene 3 represented by the sphere 300; at an intersection point of that line 36 with the surface of the sphere 300 (which coincides with the surface of the 3D object 35), a value is obtained and attributed to that pixel 34;
- the same operation is repeated for all pixels 34 in the canvas 33 until the whole image is obtained.

A mapping between the sphere 300 and an individual planar view is thereby obtained. Additional steps are required for getting the mapping between the individual planar view (canvas 33) and the equirectangular projection 31. To obtain planar coordinates $(x, y)$ in that equirectangular projection 31 from spherical coordinates on the sphere, given by the longitude $\lambda$ and latitude $\phi$, the following equations apply:

$$x = (\lambda - \lambda_0) \cos \phi_1 \qquad (1)$$

$$y = \phi - \phi_1 \qquad (2)$$

where $\lambda_0$ is a central meridian and $\phi_1$ is a standard parallel, which in the case of an equirectangular projection is set to 0°.

The inverse projection, i.e. for obtaining latitude and longitude on the sphere 300 from a given position in the equirectangular projection 31, is given by:

$$\lambda = \frac{x}{\cos \varphi_1} + \lambda_0 \qquad (3)$$

$$\phi = y + \phi_1 \qquad (4)$$

In order to get the user view(s) 24, which can be extracted from the sphere 300 at each point of time depending on the viewer orientation, it can be proceeded as described above in obtaining the extracted key views to be initially edited.

Various methods can be carried out for extracting the planar key views undergoing initial editing. In one of them, the VR scene 21 is sampled in a regular manner in order to select the key views. More precisely, sampling angular distances $\theta_h$ and $\theta_v$ are determined respectively in the horizontal and vertical directions. In particular modes, those angular distances are derived from the fields of view (FoV) of the human visual system $f_{hsv}$, of the target VR device $f_{VR}$, and of the color grading monitor to be used $f_c$, each expressed in degrees of horizontal and vertical visual angles, by the smallest of those three parameters $(f_{hsv}, f_{VR}, f_c)$. That selection avoids over-sampling the VR scene 21.

In a variant implementation, the sphere 300 is encoded using a cube map projection 371 (**Figure 5A**), as represented in a folded form 372 on **Figure 5B.** The corresponding processing will not be developed in the present application, as being well known to a person skilled in the art.

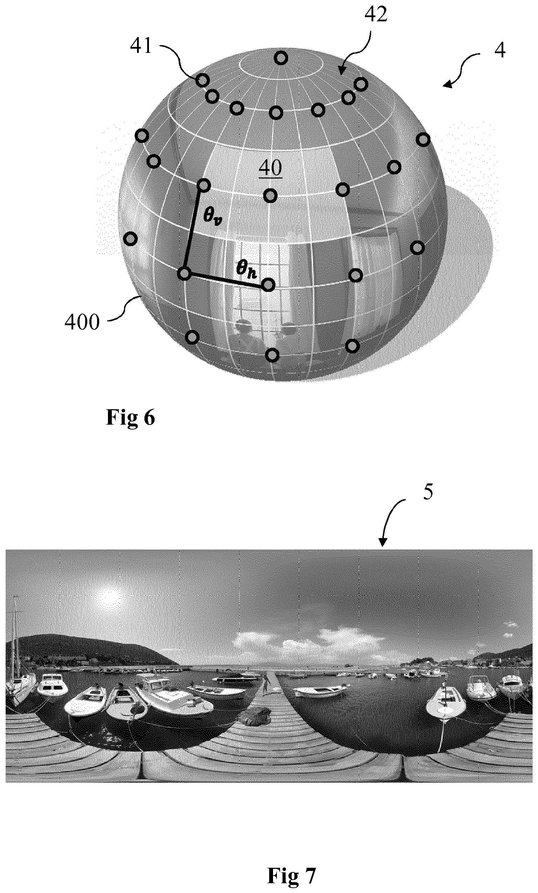

As illustrated in an example on **Figure 6,** a sphere 400 representing a VR scene 4 is sampled every $\theta_h$ and $\theta_v$ degrees (sampling 42), defining sampling points 41 that constitute the centers 41 of key views 40 to be extracted. Using a desired camera model, which can be specified by the user, and by placing a virtual camera at the center of the sphere 400, the key views 40 can be extracted for each of the sampling points 41.

Other modes of extraction of the planar key views include:

- a selection based on local information, such as an amount of local contrast, color information such as e.g. saturation or saliency, or frequency information; notably, contrast information in a scene plays a key role for guiding viewers' attention towards different parts of the scene, the human visual system perceiving scenes mostly in terms of contrast rather than direct luminance information;
- a selection based on a concentration of samples associated with brightness levels in the virtual reality scene, which can be notably relevant to importance sampling for HDR (for High Dynamic Range) applications (a larger number of points being generally allotted to brighter parts of the scene);
- a two-step selection relying on first extracting key views by e.g. a regular sampling as described above, calculating visual features for each of those key views, clustering the key views in function of those visual features and selecting a single representative key view for each of at least two resulting feature clusters;
- a selection based on surround sound changes, since it can be expected that even audio cues coming from behind the users are able to attract their attention to previously invisible parts of the scene;
- a selection based on local movement intensities, insofar as the viewer's attention and gaze are likely attracted towards parts of the scene where local motion takes mainly place.

Any alternative determination of the originally edited planar key views can be considered, such as e.g. explicit user extraction. In addition, the key view selection modes can be combined in any appropriate way.

More details about the determination of the planar key views are provided in the co-pending European patent application at the name of the present Applicant, filed on 7 June 2017 under filing number 17305675.5 (inventors: F. Pouli, J. Kervec, S. Thiebaud, H. Guermoud).

In addition, when taking account of the user view(s) 24 in determining the planar key views, it is advantageously proceeded as follows. Given one of the user views 24, which can for example be identified according to where the user is looking at within the VR scene 21, key views nearest to the user view 24 are advantageously selected among the ones obtained by any of the sets of implementation above (hereinafter candidate key views).

In particular embodiments where the candidate key views are distributed only in the horizontal direction, it is first checked whether the user view 24 corresponds exactly to any particular candidate key view. If yes, the latter is selected and subject to the desired edits. Otherwise, two closest candidate key views are determined respectively on the right (going clockwise) and on the left (going anti-clockwise) of the user view 24, and are exploited as the selected key views for interpolating edits from those right and left key views to the considered user view 24.

In other embodiments involving both the horizontal and vertical directions, several nearby views are kept as the selected key views and exploited for interpolations. They can be taken notably as all the candidate key views within a fixed radius from the user view 24.

The edit propagation module 12 will now be further developed. As previously mentioned, the original edit information 22 obtained by the reception module 11 is exploited by module 12 for propagating the edits over part or whole of the VR scene 21. In advantageous implementations, the local edits are applied at centers of the associated planar key views.

For at least one, and advantageously all, of those local edits, the edit propagated from the concerned local edit has the following particularity: it is given by the attenuation of that local edit, over the curved shape form of the VR scene 21, by an attenuation coefficient that increases with a distance from at least one reference point of the curved shape form corresponding to a local area of the planar key view associated with that local edit.

In advantageous embodiments, the at least one reference point corresponds to a center of the planar key view. The propagated edit can notably be obtained from a computed curved weight map (e.g. spherical weight map if the VR scene 21 is represented by a sphere) corresponding to the planar key view. More precisely, for each point of the edited part of the VR scene 21, the curved weight map contains a weight that is decreasing with (e.g. inversely proportional to) a distance of that point from the center of the planar key view. Namely, points closer to the key view center obtain a higher weight, while points further away obtain a lower weight.

In variants, instead of the center of the planar key view, two or more other positions in the planar key views are selected as sources from which input edits are propagated. For example, four points are identified as the local areas in a considered rectangular planar key view, located respectively at the middle of edges of the key view, or at the corners of the key view, a fifth point at the center of the key view being possibly further selected.

Some particular examples are detailed below for the VR scene 21 being represented as a 360° scene encoded as an equirectangular panorama. The latter corresponds to an image $I_e$ of dimension $w \times h$ (with $w$ for weight and $h$ for height). Within this scene, a set of $n$ key views having local edits are predefined, the center of any key view $k$ being given as a latitude / longitude pair $\phi_k, \lambda_k$. For a key view $k$, a vector of edit parameters $P_k$ is defined by the user such that:

$$P_k = [p_{k,1}, \; p_{k,2}, \ldots, \; p_{k,m}],$$

this vector defining the values of the $m$ different edit parameters corresponding to the key view $k$.

The edit propagation then relies first on the determination of a curved weight map for each of the originally edited planar key views (presently spherical, § 5.1) and secondly on an interpolation of the parameter values based on those maps (§ 5.2).

5.1 - Spherical Weight Map Calculation

To propagate the parameter values from each of the key views $k$ to the rest of the 360° VR scene, a corresponding spherical weight map $S_k$ is computed, the number of those spherical weight maps $S_k$ being equal to the number of key views $k$ provided as input. The spherical weight map $S_k$ provides lower values for points on the sphere that are further from the center of the key view $k$, and higher values for points near the key view center.

Since the 360° scene is encoded as an equirectangular panorama, the spherical weight maps $S_k$ are advantageously encoded in a similar way. As such, the spherical weight maps $S_k$ are also of dimensions $w \times h$.

For each pixel coordinate $x_e$, $y_e$ in the equirectangular image $I_e$, a weight $S_k$ ($x_e$, $y_e$) is computed using the following steps, which are described for a single key view $k$. The same steps are executed for all the originally edited key views to compute their corresponding spherical weight maps.

First, the Cartesian image coordinates $x_e$, $y_e$ are converted to spherical coordinates (latitude and longitude) $\phi_e$, $\lambda_e$ as follows:

$$\phi_e = 180 * \left(\frac{y_e}{h} - 0.5\right) \tag{1}$$

$$\lambda_e = 360 * \left(\frac{x_e}{w} - 0.5\right) \tag{2}$$

The orthodromic distance $\Delta_\sigma$ (i.e. distance on the surface of the sphere) between the point having latitude $\phi_e$ and longitude $\lambda_e$, and the center of the key view k having latitude $\phi_k$ and longitude $\lambda_k$ is given by:

$$\Delta_\lambda = |\lambda_k - \lambda_e| \tag{3}$$

$$\Delta_\sigma = \arccos(sin(\phi_k) \cdot sin(\phi_e) + cos(\phi_k) \cdot cos(\phi_e) \cdot cos(\Delta_\lambda)) \tag{4}$$

This distance $\Delta_\sigma$ is then used to compute the weight for that pixel in the equirectangular projection format:

$$S_k(x_e, y_e) = \left(1 - \frac{\Delta_\sigma}{180}\right)^c \tag{5}$$

where $c$ is an optional non-linearity that can be used to control the weight-distance relationship. By default, that non-linearity is neutralized and $c = 1$. As visible on formula (5), values in the opposite side of the sphere relative to the key view center corresponding to the associated spherical weight map $S_k$ (antipode) are set to zero.

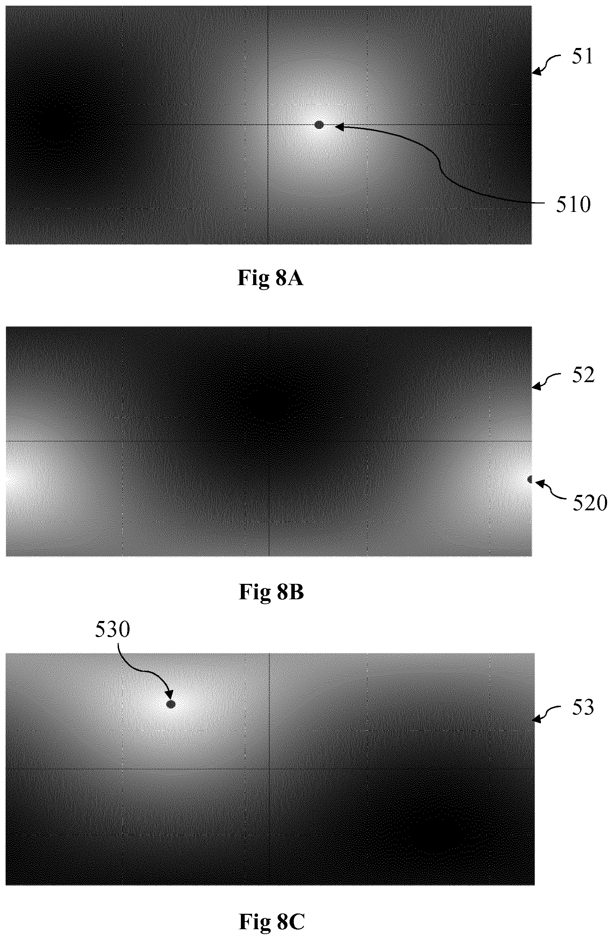

Illustrations of such spherical weight maps $S_k$ are visible on equirectangular representations corresponding to an example image 5 of a 360° scene (**Figure 7**), for three different edits associated with respective planar key views (**Figures 8A, 8B, 8C**). On those three representations shown with a zero latitude axis and a zero longitude axis, respective key view centers 510, 520 and 530 associated with respective edits lead to respective spherical weight maps 51, 52 and 53. The latter appear with respective halos surrounding the key view centers 510, 520 and 530, possibly offset from one edge of the equirectangular representation to an opposite one (see particularly spherical weight map 52).

In a first variant of the spherical weight map calculation, the spherical weight map values are re-scaled so that they do not decrease below a given floor value $\tau_{low}$. The values in a spherical weight map $S_k$ for key view $k$ at pixel coordinates $x_e$, $y_e$ are then given by:

$$S'_k(x_e, y_e) = S_k(x_e, y_e) * (1 - \tau_{low}) + \tau_{low} \tag{6}$$

In a second variant of the spherical weight map calculation, the spherical weight map values are clipped so that they do not decrease below a given floor value $\tau_{low}$. The values in a spherical weight map $S_k$ for key view $k$ at pixel coordinates $x_e$, $y_e$ are then given by:

$$S'_k(x_e, y_e)f(x) = \begin{cases} S_k(x_e, y_e), & S_k(x_e, y_e) \geq \tau_{low} \\ \tau_{low}, & S_k(x_e, y_e) < \tau_{low} \end{cases} \tag{7}$$

Both first and second variants above prevent a total absence of influence of a local edit on an opposite side of the VR view representation, and further provide a flexibly adjustable influence. While the first variant can offer a smoothly decreasing effect down to that opposite side, the second variant can offer an area of flat residual effect.

5.2 - Interpolation of parameter values

Once the spherical weight maps $S_k$ are computed for each key view k, they are used to determine the parameter value corresponding to each point on the sphere, or to each pixel in the equirectangular view.

For a pixel having coordinates $x_e$, $y_e$ in the rectangular image, a parameter value $p_{e,1}$ is computed for a first parameter $p_1$ as a weighted sum of parameter values $p_{k,1}$ corresponding to the respective key views $k$:

$$p_{e,1} = \sum_{k=1}^{n} p_{k,1} \cdot w_k \qquad (8)$$

where each weight $w_k$ is defined as:

$$w_k = \frac{S_k(x_e, y_e)}{\omega(x_e, y_e)} \qquad (9)$$

and a normalization factor $\omega$ is used to ensure that the weight sum is worth 1:

$$\omega = \sum_{k=1}^{n} S_k(x_e, y_e) \qquad (10)$$

Values for further parameters are computed similarly.

In a first and a second variant of the above interpolation, the weight maps $S_k$ in formulas (9) and (10) are replaced respectively with re-scaled weight maps and clipped weight maps, as described above for the determination of the spherical weight maps in relation with respective formulas (6) and (7). The weight map expressions can also be combined in any appropriate way, e.g. using weight maps decreasing to zero at opposite sphere side for some of the associated key views and/or some of the edit parameters, and re-scaled and/or clipped weight maps for others of the associated key views and/or edit parameters.

In the previous implementations, the weights depend on the distance to each key view center directly, and are all scaled in a similar way (equations (8), (9)). Accordingly, at a pixel corresponding to a key view center (coordinates $x_k$, $y_k$), the obtained parameter vector $P_e$ may differ, and usually differs, from the parameter vector $P_k$ defined for the related key view $k$. Though providing a globally spread effect of the local edits, which can be considered as appropriate in multiple applications, it may also prove undesirable in other cases.

An alternative approach as defined below enables to enhance the edit propagation in those other cases. For a pixel having coordinates $x_e$, $y_e$ in the rectangular image, a parameter value $p_{e,1}$ is computed for the first parameter $p_1$ as a weighted sum of parameter values $p_{k,1}$ corresponding to the respective key views $k$, using formula (8) as above.

However, by contrast with the previous solution, a nearest key view $j$ is then determined, such that the weight $S_j(x_e, y_e)$ is maximal with respect to the other key views $k$. Then, the weights $w_k$ are computed by:

$$w_k = \begin{cases} S_k(x_e, y_e), & k == j \\ \frac{S_k(x_e, y_e)}{\omega(x_e, y_e)} * \left(1 - Sj(x_e, y_e)\right), & \text{otherwise} \end{cases} \qquad (11)$$

where the normalization factor $\omega$ is computed as the sum of all weights for that pixel, but excluding the weight of the nearest key view $j$:

$$\omega(x_e, y_e) = \left(\sum_{k=1}^{n} S_k(x_e, y_e)\right) - S_j(x_e, y_e) \qquad (12)$$

In this way, the weight $w_j$ corresponding to the nearest key view $j$ is preserved unscaled, while the weights $w_k$ for the other key views $k$ are scaled such that the sum of all weights still equals 1. Accordingly, at pixels aligned with key view centers, the exact parameter values defined at the key view are applied (since $S_j(x_j, y_j) = 0$, see formulas (3), (4), (5)).

In the implementations described above, each pixel obtains interpolated parameters, which is particularly suited to an off-line pre-processing phase.

In variant implementations adapted to real-time applications, parameter values are defined per view instead of per pixel. For example, the VR scene 21 is transmitted together with coordinates defining planar key view centers and with parameter values corresponding to each key view (i.e. the original edit information 22). Also, while a user views the VR scene 21, a center of the current user view 24 can be obtained e.g. from headset sensors through head position tracking (i.e. latitude and longitude $\phi_u$, $\lambda_u$).

Weights $w_k$ are then advantageously computed based on the distances between that user view center and the respective key view centers (rather than computing full weight maps as previously done), in the same way as developed above (see formulas (3), (4) and (5), or the variants involving formula (6) or (7)). The resulting weights $w_k$ are combined with the values of the respective edit parameters $p_{k,i}$ associated with the corresponding key views $k$, as e.g. stated in formulas (8), (9), (10) (or the variant corresponding to formulas (11) and (12)), which provides the parameter values $p_{u,i}$ at the center of the user view 24. Those parameter values $p_{u,i}$ can be globally and homogeneously applied to the current user view 24.

Alternatively, all pixels of user view 24 are processed as indicated above (executing weight computations based on distances between each of those pixels and the centers of the planar key views, and parameter interpolation relying on the obtained weights).

In variant embodiments similar to what is mentioned above about the global VR scene processing, other local areas of the planar key views than the key view centers are associated with the local edits. Those other local areas and the related original edits are exploited for editing the user view 24.

Also, as developed above in particular embodiments directed to the user view 24, not all local edits and associated planar key views are used for edit interpolation, but only selected ones. The latter include advantageously the planar key views closest to the user view 24, which can e.g. be defined as those having the highest weights $S_k$ at the user view center.

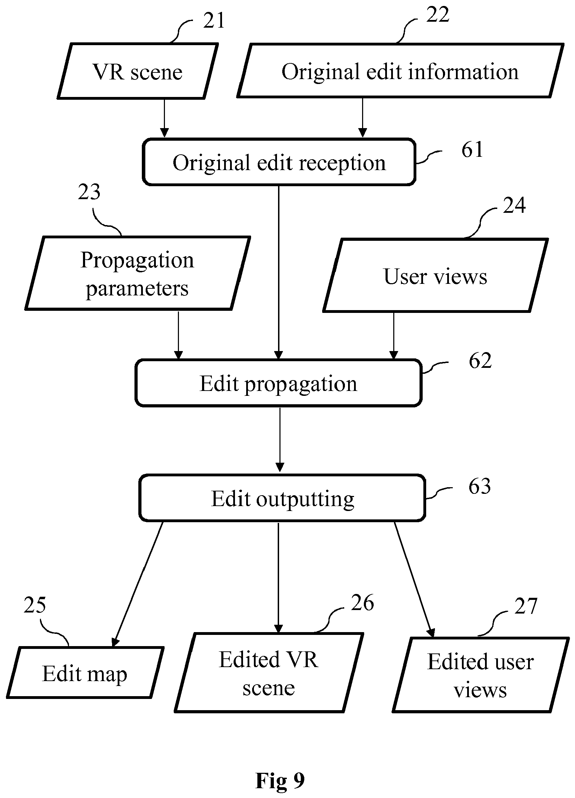

In execution, as illustrated on **Figure 9,** the device 1 can proceed as follows in editing the VR scene 21. The original edit information 22 is received together with the VR scene 21 at step 61, and those are exploited for edit propagation at step 62, on the ground of the propagation parameters 23 and, when appropriate, the current user view(s) 24. The edits are then outputted at step 63, in the form of the edit map 25, the edited VR scene 26 and/or the edited user views 27.

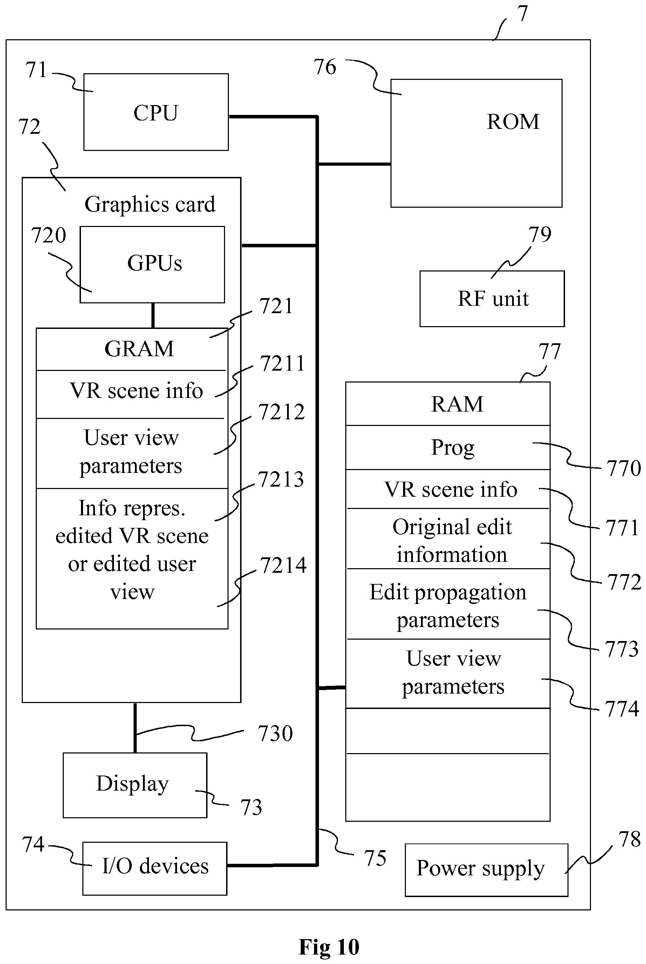

A particular apparatus 7, visible on **Figure 10,** is embodying the device 1 described above. It corresponds for example to a tablet, a smartphone, a head-mounted display (HMD), or a games console - such as a specialized games console producing and displaying images live.

Advantageously, the apparatus 7 is adapted to 360° immersive display, such as notably an HMD or a centralized picoprojector set. In alternative implementations, the apparatus 7 has instead a limited FoV (e.g. a tablet) while being adapted to visualize pieces of a full 360° scene when rotated around a user.

That apparatus 7 is suited to virtual reality. In some implementations, it is alternatively or also relevant to augmented reality (AR), whether for direct view (the user is typically viewing the real 3D scene through a glass), indirect view (the user is viewing the real 3D scene displayed on a screen), or both. AR applications refer to a live view of a real-world environment whose elements are augmented by computer-generated (CG) content, such as video or graphics. In the present disclosure, AR further encompasses Mixed Reality (MR), in which the CG content further interacts with the real-world environment, and digital and physical realities seamlessly blend together. In some AR embodiments of the apparatus 7, portions of the edited VR scene 26 or of the edited user view 27 are mixed with live views of the real-world environment.

The apparatus 7 comprises the following elements, connected to each other by a bus 75 of addresses and data that also transports a clock signal:

- a microprocessor 71 (or CPU) ;
- a graphics card 72 comprising several Graphical Processor Units (or GPUs) 720 and a Graphical Random Access Memory (GRAM) 721;
- a non-volatile memory of ROM type 76;
- a RAM 77;
- one or several I/O (Input/Output) devices 74 such as for example a keyboard, a mouse, a joystick, a webcam; other modes for introduction of commands such as for example vocal recognition are also possible;
- a power source 78 ; and
- a radiofrequency unit 79.

The apparatus 7 also comprises a display device 73 of display screen type directly connected to the graphics card 72 to display synthesized images calculated and composed in the graphics card, for example live. The use of a dedicated bus to connect the display device 73 to the graphics card 72 offers the advantage of having much greater data transmission bitrates and thus reducing the latency time for the displaying of images composed by the graphics card. According to a variant, a display device is external to apparatus 7 and is connected thereto by a cable or wirelessly for transmitting the display signals. The apparatus 7, for example through the graphics card 72, comprises an interface for transmission or connection adapted to transmit a display signal to an external display means such as for example an LCD or plasma screen or a video-projector. In this respect, the RF unit 79 can be used for wireless transmissions.

In an alternative implementation, the display device 73 corresponds to a glass through which the user is seeing the real environment, and the apparatus 7 further comprises an optical projection system (not represented), which enables to project e.g. generated virtual images or contents on the glass.

It is noted that the word "register" used in the description of memories 721 and 77 can designate in each of the memories mentioned, a memory zone of low capacity (some binary data) as well as a memory zone of large capacity (enabling a whole program to be stored or all or part of the data representative of data calculated or to be displayed). Also, the registers represented for GRAM 721 can be arranged and constituted in any manner, and each of them does not necessarily correspond to adjacent memory locations and can be distributed otherwise (which covers notably the situation in which one register includes several smaller registers).

When switched-on, the microprocessor 71 loads and executes the instructions of the program contained in the RAM 77.

The random access memory 77 comprises notably:

- in a register 770, the operating program of the microprocessor 71;
- in a register 771, information representative of a VR scene (for example models of the object(s) of the scene and lighting parameters);
- in a register 772, information representative of original edits, such as local edits and associated planar key views;
- in a register 773, edit propagation parameters;
- in a register 774, parameters representative of user views.

The algorithms implementing the steps of the method specific to the present disclosure and described above are stored in the memory GRAM 721 of the graphics card 72 associated with the apparatus 7 implementing those steps. When switched on and once the parameters 771, 772 and 773, and possibly 774 (in case of automatic edits and focus on user view) are loaded into the RAM 77, the original edits are propagated and the edited VR scene 26 or user views 24 are obtained. The graphic processors 720 of graphics card 72 load the appropriate information and parameters into the GRAM 721 and execute the instructions of algorithms in the form of microprograms of "shader" type using HLSL (High Level Shader Language) language or GLSL (OpenGL Shading Language) for example. Those algorithms include the edit propagation to the VR scene or user views.

The random access memory GRAM 721 comprises notably:

- in a register 7211, the information representative of the VR scene;
- in a register 7212, the parameters representative of user views;
- in a register 7213, the information representative of the edited VR scene or edited user views.

In the above embodiment, the edit propagation is effected in the RAM 77 and retrieved and rendered in the GPUs 720. In variant implementations, the GPUs 720 are adapted to proceed with the edit propagation over the VR scene or the user views, and the registers are suited thereto.

In alternative embodiments, the CPU 71 is adapted to produce the edit map 25, which is transmitted to the GPUs 720 for generating the edited VR scene 26 or edited user views 27.

As will be understood by a skilled person, the presence of the graphics card 72 is not mandatory, and can be replaced with simpler visualization implementations.

According to another variant, the power supply 78 is external to the apparatus 7.

On the ground of the present disclosure and of the detailed embodiments, other implementations are possible and within the reach of a person skilled in the art without departing from the scope of the invention. Specified elements can notably be interchanged or associated in any manner remaining within the frame of the present disclosure. Also, elements of different implementations may be combined, supplemented, modified, or removed to produce other implementations. All those possibilities are contemplated by the present disclosure.

**Claims**

1. A method for propagating edits in a virtual reality scene (21) represented in a curved shape form, **characterized in that** said method comprises:

   - obtaining (61) at least one local edit enforced on at least one planar key view of said virtual reality scene;

- propagating (62) said at least one local edit from said at least one planar key view to at least one part of said virtual reality scene beyond said at least one planar key view by applying at least one propagated edit to said at least one part, said at least one propagated edit being given by attenuating said at least one local edit over said curved shape form by at least one respective attenuation coefficient increasing with a distance from at least one reference point of said curved shape form corresponding to a local area of said at least one planar key view, to any edit point of said at least one part.

2. A method for propagating edits according to claim 1, **characterized in that** said local area of at least one of said at least one planar key view is located at a center of said planar key view.

3. A method for propagating edits according to claim 1 or 2, **characterized in that** said distance is a geodesic distance on said curved shape form.

4. A method for propagating edits according to any of the preceding claims, **characterized in that** said at least one local edit and propagated edit are based on at least one of editing operations among color grading, visual enhancement and special effects.

5. A method for propagating edits according to any of the preceding claims, **characterized in that** said at least one local edit consists in at least two local edits enforced on respectively at least two planar key views and jointly propagated to said at least one part.

6. A method for propagating edits according to claim 5, **characterized in that** said method comprises propagating said at least two local edits from the at least two reference points associated respectively with said at least two planar key views, by a weighted sum of the at least two propagated edits corresponding respectively to said at least two local edits.

7. A method for propagating edits according to claim 6, **characterized in that** said weighted sum has as weights the at least two attenuation coefficients respectively associated with said at least two local edits, normalized by a sum of said at least two attenuation coefficients.

8. A method for propagating edits according to claim 6, **characterized in that** said weighted sum has as weights, at a position of said curved shape form, on one hand the attenuation coefficient associated with the at least one local edit corresponding to the at least one of said planar key views closest to said position, and on the other hand the attenuation coefficients normalized by a sum of the attenuation coefficients normalized by a sum of the attenuation coefficients associated with the local edits corresponding to the others of said planar key views.

9. A method for propagating edits according to any of the preceding claims, **characterized in that** said attenuation coefficient increases as a power greater than one of said distance from said at least one reference point.

10. A method for propagating edits according to any of claims 1 to 8, **characterized in that** said attenuation coefficient increases linearly with said distance from said at least one reference point.

11. A method for propagating edits according to any of the preceding claims, **characterized in that** said attenuation coefficient has a full value at at least one opposite point of said virtual reality scene located opposite said at least one reference point of said curved shape form, preventing any influence of said at least one local edit at said at least one opposite position.

12. A method for propagating edits according to any of claims 1 to 10, **characterized in that** said attenuation coefficient has a bounded maximal value at at least one opposite point of said virtual reality scene located opposite said at least one reference point of said curved shape form, keeping a limited influence of said at least one local edit at said at least one opposite point.

13. A method for propagating edits according to any of the preceding claims, **characterized in that** a union of said at least one planar key view and said at least one part encompasses the whole virtual reality scene (21).

14. A method for propagating edits according to any of claims 1 to 12, **characterized in that** said at least one part is located within at least one current view (24) available to a user in the virtual reality scene (21).

15. A device (1; 7) for propagating edits in a virtual reality scene (21) represented in a curved shape form, **characterized in that** said device comprises at least one processor configured for:

- obtaining (11) at least one local edit enforced on at least one planar key view of said virtual reality scene;
- propagating (12) said at least one local edit from said at least one planar key view to at least one part of said virtual reality scene beyond said at least one planar key view by applying at least one propagated edit to said at least one part, said at least one propagated edit being given by attenuating said at least one local edit over said curved shape form by at least one respective attenuation coefficient increasing with a distance from at least one reference point of said curved shape form corresponding to a local area of said at least one planar key view, to any edit point of said at least one part,

said device being preferably configured for executing a method according to any of claims 1 to 14.

16. A computer program comprising software code adapted to perform a method according to any of claims 1 to 14 when it is executed by a processor.

**Fig 1**

**Fig 2**

**Fig 3**

**Fig 4**

**Fig 5A**

**Fig 5B**

**Fig 6**

**Fig 7**

**Fig 8A**

**Fig 8B**

**Fig 8C**

VR scene — 21

Original edit information — 22

Original edit reception — 61

Propagation parameters — 23

User views — 24

Edit propagation — 62

Edit outputting — 63

Edit map — 25

Edited VR scene — 26

Edited user views — 27

**Fig 9**

**Fig 10**

Europäisches
Patentamt

European
Patent Office

Office européen
des brevets

# EUROPEAN SEARCH REPORT

Application Number

EP 17 30 5809

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CUONG NGUYEN ET AL: "Vremiere", PROCEEDINGS OF THE 2017 CHI CONFERENCE ON HUMAN FACTORS IN COMPUTING SYSTEMS , CHI '17, ACM PRESS, NEW YORK, NEW YORK, USA, 2 May 2017 (2017-05-02), pages 5428-5438, XP058337745, DOI: 10.1145/3025453.3025675 ISBN: 978-1-4503-4655-9 * abstract * * page 5428, left-hand column * ----- | 1-16 | INV. G06T19/20 |
| Y | US 2014/071347 A1 (CHEN XIAOWU [CN] ET AL) 13 March 2014 (2014-03-13) * abstract * * figure 7 * * paragraphs [0005] - [0033], [0046] * * paragraphs [0057] - [0079] * ----- | 1-16 | |
| Y | KUN XU ET AL: "Efficient affinity-based edit propagation using K-D tree", ACM TRANSACTIONS ON GRAPHICS (TOG), ACM, US, vol. 28, no. 5, 1 December 2009 (2009-12-01), pages 1-6, XP058096118, ISSN: 0730-0301, DOI: 10.1145/1618452.1618464 * page 1 - page 4 * ----- -/-- | 1-16 | TECHNICAL FIELDS SEARCHED (IPC) G06T |

The present search report has been drawn up for all claims

| Place of search | Date of completion of the search | Examiner |
|---|---|---|
| Munich | 21 November 2017 | Fernández Cuenca, B |

EPO FORM 1503 03.82 (P04C01)

page 1 of 2

Europäisches
Patentamt

European
Patent Office

Office européen
des brevets

# EUROPEAN SEARCH REPORT

Application Number

EP 17 30 5809

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CHEN XIAOWU ET AL: "Sparse Dictionary Learning for Edit Propagation of High-Resolution Images", 2014 IEEE CONFERENCE ON COMPUTER VISION AND PATTERN RECOGNITION, IEEE, 23 June 2014 (2014-06-23), pages 2854-2861, XP032649487, DOI: 10.1109/CVPR.2014.365 [retrieved on 2014-09-24] * abstract * * paragraphs [0001], [03.3] * | 1-16 | |

TECHNICAL FIELDS
SEARCHED      (IPC)

The present search report has been drawn up for all claims

| Place of search | Date of completion of the search | Examiner |
|---|---|---|
| Munich | 21 November 2017 | Fernández Cuenca, B |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 17 30 5809

This annex lists the patent family members relating to the patent documents cited in the above-mentioned European search report.
The members are as contained in the European Patent Office EDP file on
The European Patent Office is in no way liable for these particulars which are merely given for the purpose of information.

21-11-2017

| Patent document cited in search report | Publication date | Patent family member(s) | Publication date |
|---|---|---|---|
| US 2014071347 A1 | 13-03-2014 | CN 102903128 A<br>US 2014071347 A1 | 30-01-2013<br>13-03-2014 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 17305675 A


**Non-patent literature cited in the description**

- Spherical Diffusion. **T. BÜLOW.** Technical Report. University of Pennsylvania, 2001

- **R. SZELISKI.** Computer vision: algorithms and applications. Springer Science & Business Media, 2010